## Europäisches Patentamt

## European Patent Office

## Office européen des brevets

(19)

(11) Veröffentlichungsnummer: **0 138 055 B1**

(12) **EUROPÄISCHE PATENTSCHRIFT**

(45) Veröffentlichungstag der Patentschrift:
**07.12.88**

(51) Int. Cl.⁴: **G 01 S 7/52, B 25 J 19/00**

(21) Anmeldenummer: **84110828.5**

(22) Anmeldetag: **11.09.84**

(54) Verfahren zur Signalauswertung von Ultraschall-Echosignalen, wie sie bei Verwendung eines Ultraschall-Sensors an einem Roboterarm auftreten.

(30) Priorität: **29.09.83 DE 3335421**

(43) Veröffentlichungstag der Anmeldung:
**24.04.85 Patentblatt 85/17**

(45) Bekanntmachung des Hinweises auf die Patenterteilung:
**07.12.88 Patentblatt 88/49**

(84) Benannte Vertragsstaaten:
**AT CH DE FR GB IT LI SE**

(56) Entgegenhaltungen:
**DE-A- 2 845 164**

**SIEMENS FORSCHUNGS- U. ENTWICKLUNGSBERICHTE, Band 10, Nr. 2, 1981; P. KLEINSCHMIDT et al. "Ultrasonic remote sensors for noncontact object detection", Seiten 110-118
INTRODUCTION TO RADAR SYSTEMS, second edition; 1980, M.I. SKOLNIK, McGRAW-HILL INTERNATIONAL BOOK COMPANY**

(73) Patentinhaber: **Siemens Aktiengesellschaft Berlin und München, Wittelsbacherplatz 2, D-8000 München 2 (DE)**

(72) Erfinder: **Mágori, Valentin, Dipl.-Phys., Limburgstrasse 17, D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung bezieht sich auf ein Verfahren, wie es im Oberbegriff des Patentanspruchs 1 angegeben ist.

Es ist aus Siemens Forsch. u. Entw. Ber. Bd. 10, (1981), S. 110ff bekannt, Ultraschall-Wandler als Distanz-Sensoren z.B. zum Erfassen von Werkstücken zu verwenden, und zwar auch in der Robotik, sowohl zum Erkennen eines Objekts als auch zur Positionierung des Roboterarmes. Insbesondere die vergleichsweise zu elektromagnetischer Strahlung niedrige Schallgeschwindigkeit des Ultraschalles gestattet eine einfache und direkte Messung der Distanz zwischen Roboterarm bzw. dessen Greifer oder Werkzeug und dem zu greifenden bzw. zu bearbeitenden Objekt. Die örtliche Auflösung und Genauigkeit der Führung eines Roboterarmes aufgrund der Signalauswertung von Ultraschall-Echosignalen ist ausserordentlich hoch und nimmt sogar mit abnehmender Distanz, d.h. mit Annäherung an das Objekt, zu. Ultraschall-Wandler sind klein und leicht und können so auch in einfacher Weise an einem Roboterarm montiert werden.

Von besonderem Vorteil ist es für die Erfindung, Ultraschall-Wandler zu verwenden, wie sie aus der DE-PS 2 541 492 bekannt sind. Diese Wandler haben eine sehr gute Richtcharakteristik bei vergleichsweise geringen Abmessungen. Wandler dieser Patentschrift können auch in grösserer Anzahl an einem Roboterarm angebracht werden, ohne dass sie die sonstigen Funktionen bzw. Möglichkeiten für Anbringung von Greifern oder Werkzeugen beeinträchtigen.

Es ist bekannt, mit Ultraschall Distanzmessung durchzuführen, indem man die Laufzeit des Ultraschalles zwischen Sende-Impuls und Echo-Impuls aufnimmt und auswertet. Es ist dabei jedoch zwischen solchen Echosignalen, die von sonstigen Gegenständen oder sonstigen Stellen eines Objekts herrühren, und dem Echosignal zu unterscheiden, das auf der Ultraschall-Reflexion an der gewünschtermassen zu detektierenden Stelle beruht. Es gibt bereits Verfahren, diese Echosignale voneinander zu unterscheiden.

Es ist eine Aufgabe der vorliegenden Erfindung, ein Verfahren zur verbesserten Auswertung der Echosignale von Ultraschall-Sendeimpulsen, und zwar insbesondere für die Robotik, anzugeben, wobei insbesondere Wert darauf gelegt ist, eine erhöhte Richtungsempfindlichkeit (als sie der vorgegebene Ultraschall-Sendewandler bereits von sich aus besitzt) zu erreichen, ohne Änderung mechanischer Justierung des Ultraschall-Sendewandlers Detektion auch in schrägen Richtungen zu ermöglichen, Störungen und/oder Echos von Festzielen auszublenden und/oder Verbesserung des Signal-Rausch-Verhältnisses des Echo-Empfangssignals zu erreichen sowie ggf. ausserdem auch eine Objekterkennung zu erzielen. Aufgabe einer bevorzugten Weiterbildung der Erfindung ist es, Selbstkorrektur in das erfindungsgemässe Verfahren durch adaptiven Prozess zu integrieren.

Diese Aufgabe wird mit einem Verfahren nach dem Oberbegriff des Patentanspruchs 1 mit Hilfe der Merkmale des Kennzeichens des Patentanspruchs 1 gelöst. Die angegebene Aufgabenstellung einer Weiterbildung wird durch Hinzunahme der Merkmale des Patentanspruchs 13 gelöst.

Der Erfindung liegt der Gedanke zugrunde, eine fortlaufende Integration der Echo-Signale aufeinanderfolgender Folgen von Echo-Signalen, die auf aufeinanderfolgenden Sende-Impulsen beruhen, durchzuführen. Gemäss der Erfindung ist dabei in der Weise zu integrieren, dass das gewünschte integrierte Signal nicht mehr von der zwischen den einzelnen Sende-Impulsen eingetretenen Ortsveränderung des Wandlers beeinflusst ist. Dabei wird vorteilhafterweise erreicht, dass ein mit dem Ultraschall gewolltermassen nicht anvisiertes Ziel im integrierten Signal zerfliesst und ein erhöhter Signalabstand zwischen auszuwertendem Nutzsignal und sonstigen auftretenden Echosignalen oder auch Störsignalen – wie z.B. Störgeräusche und/oder akustisches Überkoppeln zwischen den Wandlern – eintritt. Die Praxis der Erfindung ist die, die in zeitlicher Folge zu empfangenden Echosignale eines ersten Sende-Impulses des Ultraschall-Wandlers in einen Speicher einzuspeichern, und zwar derart, dass diese zeitliche Signalfolge in eine entsprechende Folge von Speicherpositionen umgesetzt wird. Die Folge der Echosignale des nächstfolgenden zweiten Sende-Impulses wird ebenfalls empfangen und wird dann zu den einzelnen bereits gespeicherten Echosignalen der vorangehend empfangenen Echosignalfolge aufsummiert bzw. aufintegriert. Die auf dem zweiten Sende-Impuls beruhenden Echosignale werden nun aber in ihrer zeitlichen Folge derart in die Speicherpositionen eingespeichert, dass das auszuwertende Echosignal, d.h. das Echosignal der zu beobachtenden Stelle des Objekts, in die Speicherposition eingespeichert wird, in der auch das gleiche auszuwertende Echosignal des ersten Sende-Impulses gespeichert worden ist. Dies wird im selben Sinne fortgesetzt für den dritten, vierten und alle vorgegebenen weiteren Sende-Impulse. Die angegebene Verschiebung der Einspeicherung bedeutet, dass die Echo-Laufzeit der Echos des zweiten Sende-Impulses elektronisch um dasjenige Mass verändert worden ist, das sich aus der zwischen erstem und zweitem Sende-Impuls eingetretenen Distanzänderung zwischen Ultraschall-Wandler und zu beobachtender Stelle des Objekts ergibt. Dasselbe gilt für die Distanzänderung zwischen zweitem und drittem Sende-Impuls und damit auch zwischen drittem und erstem Sende-Impuls. Erfindungsgemäss eingeführte Verschiebung kann auch auf die relative Distanzänderung bezogen sein, die zwischen dem in einer Richtung bewegten Wandler und einer in einem Winkel $\alpha$ dazu seitwärts gerichteten Objektstelle auftritt. Es gehört zu Weiterbildungen der Erfindung, Integrationen mit Zeitverschiebungen bzw. Speicherpositions-Verschiebungen vorzunehmen, die sowohl auf die direkte Richtung der Bewegung des Wandlers als auch auf Raumwinkel-Richtungen $\alpha_1$, $\alpha_2$

... bezogen sind. Für die direkte Richtung ist dabei $\alpha_0 = 0$ Grad. Die Integrationen für verschiedene Winkel $\alpha_0, \alpha_1, \alpha_2 \ldots$ können zeitlich nacheinander alternativ durchgeführt werden. Bei entsprechend umfangreich ausgestalteter Elektronik zur Durchführung des erfindungsgemässen Verfahrens können solche Integrationen für den Winkel $\alpha_0 = 0$ und $\alpha_1, \alpha_2 \ldots$ auch gleichzeitig durchgeführt werden. Dadurch ergibt sich für ein Objekt zusätzlich zu dem aus der Signal-Laufzeit ermittelten Abstand vom Wandler der Winkel zur Bewegungsrichtung. Dies bedeutet, ein im Winkelbereich $\alpha_i$ detektiertes Objekt befindet sich im gemessenen Abstand vom bewegten Ultraschall-Aufnehmer auf dem Kegelmantel im Winkel $\alpha_i$ zur Bewegungsrichtung, d.h. auf dem ringförmigen Bereich, der vom Ultraschall-Aufnehmer aus in dem der Signal-Laufzeit entsprechenden Abstand im Winkel $\alpha_i$ zur Bewegungsrichtung gesehen wird.

Obschon diese räumliche Zuordnung der Objekte für viele Zwecke ausreichend ist, z. B. bei der Kollisionssicherung, wo es unerheblich ist, mit welcher Seite ein Robotergreifer an ein Objekt anstösst, ist es in vielen Fällen wünschenswert, die räumliche Position eines Objektes genauer zu definieren, z.B. um festzustellen, in welcher Richtung einem Objekt ausgewichen werden kann. Dies kann durch eine Mehrfachanordnung von räumlich verteilten Ultraschall-Aufnehmern am bewegten Roboterarm erreicht werden, bei der das Objekt bei jedem der Wandler in einem eigenen ringförmigen Bereich unter dem Winkel $\alpha_{ij}$ erscheint. Als eindeutige örtliche Position des Objekts ergibt sich derjenige Bereich, in dem sich die Ringe überschneiden. Bei Verwendung lediglich zweier Ultraschall-Aufnehmer ergeben sich im allgemeinen zwei Überschneidungsbereiche. Entsprechend ist die Position des Objekts noch zweideutig.

Bei Mehrfachanordnungen genügt es, auch mit nur einem Sende-Wandler Ultraschall-Impulse abzustrahlen und die Echos mit mehreren örtlich verteilten Empfangs-Wandlern aufzunehmen.

Bei Objekten, die ausserhalb der Bewegungsrichtung liegen, ändert sich mit der Bewegung der Winkel $\alpha$, unter dem sie während dieser Bewegung gesehen werden, und dementsprechend die Relativgeschwindigkeit, die zwischen dem bewegten Wandler und diesem Objekt jeweils vorliegt.

Es gilt für die Relativgeschwindigkeit

$$v' = \frac{v^2(t - t_o)}{a^2 + v^2(t - t_o)^2} \quad (1)$$

$$\alpha = \text{arc cos} \frac{v'}{v} \alpha \quad (2)$$

Darin sind:

v ........... die Geschwindigkeit des bewegten Wandlers in der Bewegungsrichtung,

a .......... der seitliche (orthogonale) Abstand des Objekts von der augenblicklichen Bahn des bewegten Wandlers, wenn der Wandler gradlinig weiterbewegt werden würde, und

$(t-t_0)$ ..... die Zeitdifferenz bis zum Zeitpunkt $t_0$, zu dem dieser Wandler auf diesem Wege an dem Objekt mit geringstem Abstand vorbeilaufen würde.

Je näher das Objekt herankommt, umso kleiner wird die Relativgeschwindigkeit. Durch fortlaufende Integration der Speicherpositionen der Echobilder, bei denen die Verschiebung vom zeitlichen Abstand zum Sende-Zeitpunkt abweicht, kann das Echosignal auch bei veränderlicher Relativgeschwindigkeit verstärkt werden. Dies bedeutet im Idealfall, dass Echos von Objekten verstärkt werden, die sich auf einem Zylindermantel um die Bewegungsrichtung befinden. In ähnlicher Weise ist durch entfernungsabhängige Kompensation der Relativgeschwindigkeit zu erreichen, dass Echos von Objekten verstärkt werden, die auf Mantelflächen anderer Rotationskörper um die Bewegungsrichtung liegen.

Bei einem unbekannten Winkel wird bei einer weiteren Ausgestaltung der Erfindung die Verschiebung des sukzessive aufzuintegrierenden Bildes so durchgeführt, dass die Zunahme des aufintegrierten Echos maximal wird. Dazu kann zunächst mit unterschiedlichen Verschiebungen gerechnet werden und dann die Verschiebung aufgefunden werden, bei der das integrierte Echo maximal wächst. Statt dessen kann aber auch die Berechnung der Korrelation zwischen aufintegriertem und momentanem Echo möglich sein, die ihr Maximum bei der richtigen Verschiebung aufweist. Es ist aber möglich, die der Relativgeschwindigkeit entsprechende Verschiebung vor der Aufsummierung adaptiv zu bestimmen und die Echos von einem Objekt unbekannten Ablage zu verstärken. Dabei ist durch die sich hierdurch ergebende Verschiebung die Ablage des Objekts, d.h. sein momentaner Winkel zur Bewegungsrichtung, eindeutig zu erfassen. Speziell ist so auch erkennbar, ob das Objekt in Bewegungsrichtung liegt.

Weitere Erläuterungen der Erfindung werden anhand der nachfolgenden Beschreibung zu den Figuren gegeben, ohne dass diese Beschreibung eine Beschränkung der Erfindung wäre.

Fig. 1a und 1c zeigen über der Zeit aufgetragene Amplituden der Echosignale.

Fig. 1b und 1d zeigen das Speicherschema.

Fig. 2a zeigt die Integration (Summation) der Speicherergebnisse der Fig. 1b und 1d mit einer Zuordnung der Speicherplätze bezogen auf einen ausgewählten Reflexionsort.

Fig. 2b zeigt die zu Fig. 2a gehörende integrierte Amplitudenverteilung.

Fig. 3 zeigt einen schematischen Aufbau für den Wandler und Roboter zusammen mit einer Bewegung bezüglich eines Objekts.

Fig. 4 zeigt eine Anordnung mit zwei Wandlern.

Fig. 5 zeigt eine Anordnung mit drei Wandlern mit dann eindeutiger Ortserkennung.

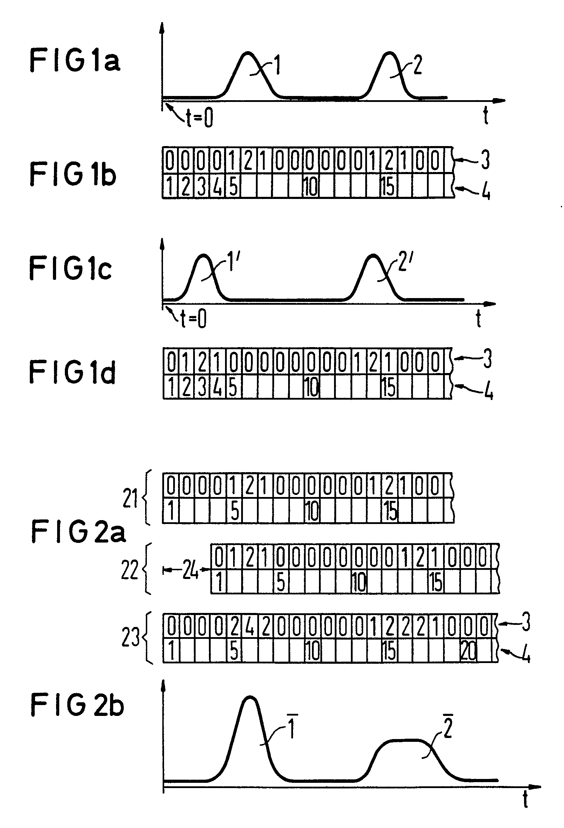

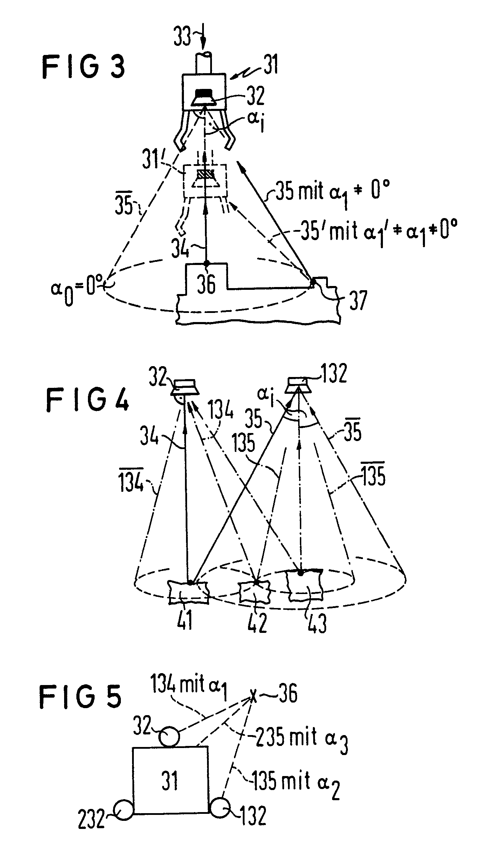

Fig. 1a zeigt über der Zeit t aufgetragen die Amplituden des Echo-Signals von einem Objekt 1 und einem Objekt 2. Es ist $t = 0$ der Zeitpunkt des Sende-Impulses. Fig. 1b zeigt dazu die Speicherpositionen, in die erfindungsgemäss die Echosignale der Fig. 1a auf zugeordneten Speicherpositionen 3 eingespeichert werden. Die untere Zeile 4 ist die Adresse der jeweiligen Speicherposition. Fig. 1c zeigt das der Fig. 1a entsprechende Bild für die Echosignale 1' und 2' des nächstfolgenden Sende-Impulses. Der zeitliche Abstand der Echosignale 1', 2' voneinander ist verschieden vom zeitlichen Abstand der Echosignale 1 und 2 der Fig. 1a. Dies beruht darauf, dass angenommenerweise das Objekt 1 (= Reflexionsort 36 in Fig. 3) direkt ($\alpha = 0$) in Bewegungsrichtung des Ultraschall-Wandlers des Roboterarmes liegt, wohingegen das Objekt 2 (= Reflexionsort 37 in Fig. 3) seitlich im Winkel $\alpha_i$ zu dieser Bewegung liegt, d.h. der aussendende Ultraschall-Wandler zum Objekt 2 hat eine zwangsläufig abweichende Distanzänderung der Relativbewegung. Die Einspeicherung der Echosignale 1' und 2' erfolgt vergleichsweise zur Fig. 1b hier gemäss der Fig. 1d in die Speicherpositionen 3 mit den Speicheradressen 4. Die Echosignale des nächsten Sende-Impulses werden in entsprechender Weise empfangen und eingespeichert.

Fig. 2 zeigt mit 21 bezeichnet das Speicherergebnis der Fig. 1b und mit 22 bezeichnet das Speicherergebnis der Fig. 1d. Die Zuordnung der Speicheradressen 4 des Ergebnisses 21 und der Speicheradressen 4 des Ergebnisses 22 erfolgt in der Weise, dass die Echosignale des Objekts 1 aller Sende-Impulse – wie dargestellt – aufeinanderintegriert werden, nämlich zu dem Ergebnis 23. Die in der Fig. 2 angedeutete Verschiebung 24 entspricht der Bewegung des Wandlers 32 in Richtung 34 (siehe Fig. 3) während der Zeitdauer zwischen den zu den Echosignalen gehörenden Sendeimpulsen.

Entsprechend sinngemäss werden die in den Speicherpositionen 3 gespeicherten Echosignale weiterer nachfolgender Sende-Impulse aufintegriert. In einer den Fig. 1a und 1c entsprechenden Darstellung 2b ergeben sich die dort ersichtlichen Amplitudenverhältnisse für das integrierte $\overline{1}$ des anvisierten Objekts $\overline{1}$ und das des Echos $\overline{2}$ des nicht anvisierten Objekts 2. Wie ersichtlich, zerfliesst das Echosignal $\overline{2}$, wohingegen das Echosignal $\overline{1}$ entsprechend der Häufigkeit der durchgeführten Integrationen hohe bzw. immer höhere Amplitude annimmt.

Der Effekt dieser dargestellten Integrationsmassnahme ist, dass ein gewünschtermassen ins Auge gefasstes Objekt 1, das z.B. das vom Greifer des Roboterarmes zu fassende Objekt ist, hervorgehoben wird und andere, z.B. auch durchaus örtlich sehr naheliegende sonstige Objekte, wie das Objekt 2, signalmässig unterdrückt werden. Dies entspricht einer schärferen Richtcharakteristik, als sie der verwendete, den Ultraschall aussendende Wandler von sich aus an sich besitzt.

Wird jedoch z.B. eine auf das Echosignal des Objekts 2 bezogene Integration durchgeführt, d.h. werden die Speicherpositionen 14, 15, 16 der Fig. 1b und die Speicherpositionen 13, 14, 15 der Fig. 1d miteinander integriert, so würde sich eine Signalanhebung des Echos des Objekts 2 ergeben. Es würde damit ein Objekt hervorgehoben werden, das sich an einem Ort bezogen auf den sendenden Ultraschall-Wandler befindet, der auf einem Raumwinkel $\alpha_1$ bezogen auf diesen Wandler und seine (augenblickliche) Vorschubrichtung befindet. Dieses Objekt 2 wäre dann durch diese Integration nicht nur gegenüber dem in direkter Richtung der Bewegung liegenden Objekt 1, sondern auch gegenüber sonstigen Objekten hervorgehoben, die auf einem noch anderen Raumwinkel $\alpha_2$, $\alpha_3$ ... bezogen zum Wandler und seiner augenblicklichen Bewegungsrichtung liegen. Die Integration kann aber auch auf ein Objekt bezogen werden, das auf dem Raumwinkel $\alpha_2$ liegt. Insbesondere können nacheinander mit einer solchen Speicherkombination oder gleichzeitig mit entsprechend vielen parallelgeschalteten Speicherkombinationen solche verschiedene Integrationen durchgeführt werden, nämlich bezogen auf verschiedene Objekte verschiedener Raumwinkel $\alpha_i$.

Fig. 3 zeigt eine gegenständliche Darstellung zur Erfindung, nämlich mit einem Greifer 31, der das Endstück eines nicht dargestellten Roboterarmes ist. Mit 32 ist ein auf dem Greifer 31 befestigter Ultraschall-Wandler bezeichnet. Dieser sendet in der auf die (momentane) Fortbewegungsrichtung 33 bezogenen Richtung mit dem Winkel $\alpha_0 = 0$ einen Anteil 34 und in einem Winkel $\alpha_1$ einen Anteil 35 seiner Ultraschall-Strahlung aus. Empfangen werden von diesem Wandler 32 Echosignale, die auf den Wegen 34 und 35 zurückkehren. Beim nächstfolgenden Sende-Impuls des Wandlers 32 hat der Greifer 31 bereits die gestrichelte dargestellte Stellung 31' erreicht mit entsprechender Änderung der Distanzen zu den Orten 36 und 37, die den Objekten 1 und 2 der voranstehenden Bechreibung entsprechen. Wird die Integration (wie in Fig. 2) auf das in Fig. 3 am Ort 36 befindliche Objekt 1 bezogen, so zerfliesst das Echosignal $\overline{2}$ des Ortes 37 nach entsprechend mehrfachem Integrieren. Wie schon oben mit anderen Worten gesagt, beruht dies auf der unterschiedlichen Distanzänderung zwischen 36 und 31 und dann 31' einerseits und 37 und 31 und dann 31' andererseits. Die letztgenannte Distanzänderung kann auch als Winkeländerung von $\alpha_1$ in $\alpha_1'$ gegenüber unverändertem Winkel $\alpha_0$ angesprochen werden. Auch aus dem Voranstehenden ist die mit der Erfindung mögliche Heraushebung des Echosignals des einen Objekts gegenüber irgendeinem anderen Objekt ersichtlich.

Wie schon aus der Beschreibung zur Fig. 2 erkennbar, lassen sich mit der Erfindung Objekte 41, 42 und 43 (Fig. 4) voneinander unterscheiden, und zwar je nach Vorgabe der Zuordnung der Speicheradressen bei der Integration, d.h. je nach Vorgabe der Verschiebung 24. Es gehören zu den Objekten 41, 42, 43 die Winkel

$$\alpha_0 = 0 \neq \alpha_1 \neq \alpha_2 \ldots$$

Die Fig. 4 zeigt ausser einem ersten Wandler 32 noch einen zweiten Wandler 132, der ebenfalls am Greifer 31 eines Roboterarmes angebracht ist.

Entsprechend dem Umstand, dass diese Wandler nebeneinander angeordnet sind, tritt eine Amplitudenerhöhung der vom Wandler 132 empfangenen Echosignale vom Objekt 41 für eine andere Integrationsverschiebung 24, nämlich entsprechend der Relativbewegung mit dem Winkel $\alpha_i$ verschieden 0 auf, als sie für den Wandler 32 für die Bewegung mit dem Winkel $\alpha_0 = 0$ bei der Integrationsverschiebung 24 auftritt. Mit 35 ist darauf hingewiesen, dass der Winkel $\alpha_i$ (verschieden von 0) an sich nur angibt, dass der Ort 36, 37 ... irgendwo auf dem zum Winkel $\alpha_i$ gehörenden Kegelmantel 35, $\overline{35}$ liegt. Mit 134 und 135 ist auf Richtungen hingewiesen, für die für den jeweiligen Wandler 32, 132 (wiederum) nur bei entsprechender Zuordnung während der Integration (Fig. 2a) die Amplitudenerhöhungen $\overline{1}$ der integrierten Echosignale auftreten. D.h., dass bei einer der Relativbewegung in Richtung 134 entsprechenden Zuordnung bzw. Verschiebung für Integration für Echosignale des Wandlers 32 und bei einer dem Winkel $\alpha_i$ entsprechenden anderen Zuordnung bzw. Verschiebung für den Wandler 132 das Objekt 42 anvisiert wird.

Ordnet man entsprechend Fig. 5 wenigstens drei Wandler 32, 132, 232 ..., vorzugsweise in einer Ebene am Greifer 31 an, so lässt sich mit Hilfe der Erfindung der anzuvisierende Ort bzw. das anzuvisierende Objekt auf elektronischem Wege sogar auffinden. Die Darstellung der Fig. 5 ist vom Greifer 31 bzw. von der Ebene der voranstehend erwähnten Wandler 32, 132, 232, aus in Richtung der augenblicklichen Bewegung des Greifers gesehen, d.h. die augenblickliche Bewegung des Greifers 31 ist senkrecht zur Ebene der Fig. 5. Eine Signalanhebung für das Objekt 51 erhält man für den Wandler 32 für eine Integrationsverschiebung entsprechend dem Winkel $\alpha_1$, für den Wandler 133 entsprechend dem Winkel $\alpha_2$ und für den Wandler 232 für den Winkel $\alpha_3$. Durch eine diesen Winkeln laterale Korrekturkomponente der Bewegung des Greifers 31 kann dieser zielsicher auf das Objekt 51 hingeführt werden.

Wie bereits oben erwähnt, können bei entsprechend dreifach ausgestatteter Auswerteelektronik gleichzeitig die Integrationen für verschiedene Winkel, d.h. mit zueinander verschiedenen Verschiebungen 24 der Speicheradressen, durchgeführt werden. Das erfindungsgemässe Verfahren kann aber auch im Zeitmultiplex-Verfahren, d.h. nacheinander, für die einzelnen Winkel $\alpha$, $\alpha_1$, $\alpha_2$ durchgeführt werden.

Das erfindungsgemässe Verfahren kann derart ausgestaltet durchgeführt werden, dass ein Sendewandler und zwei oder mehrere Empfangswandler verwendet werden, wobei letztere örtlich verteilt angeordnet sind. Die Figuren 4 und 5 zeigen eine solche Ausgestaltung. Stattdessen kann aber auch die Verwendung nur eines Empfangswandlers und zweier oder mehrerer Sendewandler vorgesehen sein.

Eine Ausgestaltung zur Durchführung eines erfindungsgemässen Verfahrens kann aber auch so gewählt sein, dass mehr als zwei Ultraschall-Wandler verwendet werden und diese sowohl als Sendewandler als auch als Empfangswandler verwendet werden.

Dabei können die Sendeimpulse der einzelnen als Sendewandler betriebenen Wandler zu verschiedenen Zeiten ausgesandt werden. Insbesondere können von den einzelnen Wandlern auch unterschiedlich codierte Signale ausgesendet werden, nämlich zur Identifizierung des auf dem jeweiligen Sendesignal beruhenden Echosignals.

Beim Betrieb eines erfindungsgemässen Verfahrens wird ein jeweiliges Echo der ggf. verschiedenen Echosignale eines Sendeimpulses ausgewählt, und zwar durch die entsprechende, in Figur 2a angedeutete Zuordnung der Speicherinformationen 21 und 22 entsprechende Echo-Empfangssignale, wobei maximale Verstärkung des ausgewählten Echos erfolgt, wie dies auch Zeile 23 der Figur 2a zeigt. Die notwendige in Zeile 22 der Figur 2a gezeigte Verschiebung kann adaptiv oder durch Korrelationsrechnung zwischen dem aufintegrierten und dem momentanen Echosignal ermittelt werden. Aus der adaptiv ermittelten Zuordnung gemäss Figur 2a lassen sich für das bewegte System die Bahnparameter wie die Relativgeschwindigkeit, der Abstand zur anvisierten Stelle des Objekts, der Winkel und dgl. ermitteln, wobei wenigstens ein Wandler für das Aussenden und ein Wandler für das Empfangen vorhanden sein muss.

## Patentansprüche

1. Verfahren zur Auswertung der Echosignale (1, 2), die bei Bewegung eines Roboters, insbesondere des Roboterarmes bzw. -greifers (31), aufgrund fortlaufend ausgesandter Sende-Impulse eines Ultraschall-Wandlers (32) in Wiederholung auftreten, wobei sich der Ultraschall-Wandler an einem sich bewegenden Teil des Roboters, insbesondere an dessen Arm bzw. Greifer, befindet, gekennzeichnet dadurch,
dass die in zeitlicher Folge eintreffenden Echosignale (1, 2; 1', 2') eines jeweiligen Sende-Impulses in entsprechender Folge in einem Speicher (3, 4) aufgenommen werden, in dem diese zeitliche Folge in eine entsprechende Folge von Speicherpositionen (3) umgesetzt wird,
dass aufeinanderfolgende Folgen von Echosignalen (1, 2 und 1', 2') aufeinanderfolgender Sende-Impulse des Ultraschall-Wandlers (32) in gleiche Folgen (Fig. 1b und 1d) der Speicherpositionen (3) gespeichert werden,
dass Integrationen (23, $\overline{1}$) der in den einzelnen Speicherpositionen (3) gespeicherten Echosignale der aufeinanderfolgenden Folgen (1, 2; 1', 2') so durchgeführt werden, dass die zwischen den aufeinanderfolgenden Sende-Impulsen auftretende jeweilige örtliche Verschiebung des auf dem Roboterarm bzw. -greifer (31) befindlichen Wandlers (32) bei der Zuordnung (24) der Speicherpositionen der einzelnen aufeinanderfolgenden Folgen zueinander kompensiert wird (Fig. 2a, 2b).

2. Verfahren nach Anspruch 1, gekennzeichnet dadurch, dass durch diese Zuordnung (24) die örtliche Verschiebung des Wandlers (32) in Bewegungsrichtung (34) des Roboterarmes bzw. -greifers (31) kompensiert wird.

3. Verfahren nach Anspruch 1, gekennzeichnet dadurch, dass durch diese Zuordnung (24) die relative Verschiebung (35) des Wandlers (32), gesehen in einem vorgegebenen Raumwinkel $\alpha_i$ bezogen auf die Bewegungsrichtung (34) des Roboterarmes bzw. -greifers (31), kompensiert wird.

4. Verfahren nach Anspruch 1, 2 oder 3, gekennzeichnet dadurch, dass durch diese Zuordnung (24) die jeweilige relative Bewegung (35), gesehen in einem vorgegebenen Raumwinkel $\alpha_i$ bezogen auf die Bewegungsrichtung (34) des Roboterarmes bzw. -greifers (31), kompensiert wird, wobei dieser Raumwinkel $\alpha_i$ abhängig von der augenblicklichen Entfernung zwischen dem Wandler (32) und einer festen Objektstelle (37) ist, die abseits der Bewegungsrichtung (34) des Roboterarmes bzw. -greifers (31) ist.

5. Verfahren nach Anspruch 3 oder 4, gekennzeichnet dadurch, dass eine solche Kompensation für jeweils mehrere vorgegebene, voneinander verschiedene Raumwinkel $\alpha_i$ ($\neq 0$) durchgeführt wird.

6. Verfahren nach einem der Ansprüche 3, 4 oder 5, gekennzeichnet dadurch, dass eine mit der Bewegung des Roboterarmes bzw. -greifers sich ändernde Vorgabe des wenigstens einen Raumwinkels $\alpha_i$ vorgesehen wird.

7. Verfahren nach einem der Ansprüche 1 bis 6, bei dem mehrere Wandler (32, 132, 232 . . .) als Ultraschall-Aufnehmer im Abstand voneinander an dem zu führenden Teil des Roboterarmes bzw. -greifers (31) angeordnet sind, gekennzeichnet dadurch, dass die aufeinanderfolgenden Folgen der Echosignale (1, 2: 1', 2') eines jeden der Wandler (32, 132, . . .) nach einem der Ansprüche 1 bis 6 verarbeitet werden, und dass zur Verminderung der Mehrdeutigkeit der Ortserkennung die bereits integrierten Echosignale der einzelnen Wandler (32, 132 . . .) in Kombination ausgewertet werden (Fig. 4, 5).

8. Verfahren nach Anspruch 7, dadurch gekennzeichnet, dass ein Sendewandler und zwei oder mehrere örtlich verteilte Empfangswandler (32, 132 . . .) verwendet werden (Fig. 4, 5).

9. Verfahren nach Anspruch 7, dadurch gekennzeichnet, dass ein Empfangswandler und zwei oder mehrere Sende-Wandler verwendet werden.

10. Verfahren nach Anspruch 7, dadurch gekennzeichnet, dass die örtlich verteilten Ultraschall-Wandler (32, 132 . . .) sowohl als Sende- als auch als Empfangswandler verwendet werden.

11. Verfahren nach einem der Ansprüche 9 oder 10, dadurch gekennzeichnet, dass mit den einzelnen Sende- bzw. Empfangswandlern (32, 132 . . .) zu verschiedenen Zeiten Ultraschall-Impulse ausgesendet werden.

12. Verfahren nach einem der Ansprüche 9 oder 10, dadurch gekennzeichnet, dass von den Wandlern (32, 132 . . .) voneinander unterschiedlich codierte Signale ausgesendet werden.

13. Verfahren nach einem der Ansprüche 1 bis 12, dadurch gekennzeichnet, dass im Bereich des jeweiligen Echos mit verschiedenen Zuordnungen (24) im Speicher (23) diejenige Zuordnung (24) adaptiv ausgewählt wird, bei der maximale Verstärkung des Echos ($\bar{2}$) erfolgt (Fig. 2a).

14. Verfahren nach einem der Ansprüche 1 bis 12, dadurch gekennzeichnet, dass die Zuordnung (24) im Speicher (23) durch Korrelationsrechnung zwischen aufintegriertem und momentanem Echo ermittelt wird.

15. Verfahren nach einem der Ansprüche 13 oder 14, gekennzeichnet dadurch, dass die Zuordnung (24) im Speicher (23) entsprechend der Änderung der Echolaufzeit eines erfassten Objekts durchgeführt wird.

16. Verfahren nach einem der Ansprüche 13 bis 15, gekennzeichnet dadurch, dass aus der adaptiv ermittelten Zuordnung (24) im Speicher (23) Bahnparameter, wie Relativgeschwindigkeit, Winkel $\alpha_i$, Abstand zur Objektstelle . . ., für das bewegte System bestehend aus wenigstens einem Sendewandler und wenigstens einem Empfangswandler (32, 132, 232 . . .) ermittelt werden.

## Claims

1. A method of analysing the echo signals (1, 2) which repeatedly occur during the movement of a robot, in particular the robot arm and/or gripper (31), as a result of continuously transmitting pulses from an ultrasonic transducer (32), where the ultrasonic transducer is attached to a moving part of the robot, in particular its arm or gripper, characterised in that

the echo signals (1, 2; 1', 2') of a respective transmitted pulse which arise in a timed sequence are recorded in a corresponding sequence in a store (3, 4) in which this timed sequence is converted into a corresponding sequence of store positions (3);

consecutive sequences of echo signals (1, 2 and 1', 2') of consecutive transmitted pulses of the ultrasonic transducer (32) are stored in identical sequences (Figures 1b and 1d) of the store positions (3); and

integrations (23, $\bar{1}$) of the echo signals of the consecutive sequences (1, 2; 1', 2') stored in the individual store positions (3) are carried out in such manner that the respective local displacement, which occurs between the consecutive transmitted pulses, of the transducer (32) which is attached to the robot arm and/or gripper (31) is compensated by the assignment (24) of the store positions of the individual consecutive sequences one-to-another (Figures 2a, 2b).

2. A method as claimed in Claim 1, characterised in that, as a result of this assignment (24), the local displacement of the transducer (32) in the direction of movement (34) of the robot arm or gripper (31) is compensated.

3. A method as claimed in Claim 1, characterised in that, as a result of this assignment (24), the relative displacement (35) of the transducer (32), viewed at a predetermined spatial angle $\alpha_i$ relative to the direction of movement (34) of the robot arm and/or gripper (31), is compensated.

4. A method as claimed in Claim 1, 2, or 3, characterised in that, as a result of this assignment (24), the respective relative movement (35), viewed at a predetermined spatial angle $\alpha_i$ relative to the direction of movement (34) of the robot arm and/or gripper (31), is compensated, where this spatial angle $\alpha_i$ is dependent upon the instantaneous distance between the transducer (32) and a fixed object position (37) which is to the side of the direction of movement (34) of the robot arm and/or gripper (31).

5. A method as claimed in Claim 3 or 4, characterised in that such a compensation is performed for a plurality of predetermined spatial angles $\alpha_i$ ($\neq 0$) which differ from one another.

6. A method as claimed in one of Claims 3, 4 or 5, characterised in that a predetermination of the minimum of one spatial angle $\alpha_i$ which changes with the movement of the robot arm and/or gripper is provided.

7. A method as claimed in one of Claims 1 to 6, where a plurality of transducers (32, 132, 232 . . .) are arranged as ultrasonic recorders at an interval from one another on that part of the robot arm and/or gripper (31) which is to be guided, characterised in that the consecutive sequences of the echo signals (1, 2; 1', 2') of each of the transducers (32, 132 . . .) are processed in accordance with one of Claims 1 to 6; and that, in order to reduce the ambiguity of the location detection, the already integrated echo signals of the individual transducers (32, 132 . . .) are analysed in combination (Figures 4, 5).

8. A method as claimed in Claim 7, characterised in that one transmitting transducer and two or more locally distributed receiving transducers (32, 132 . . .) are used (Figure 4, 5).

9. A method as claimed in Claim 7, characterised in that one receiving transducer and two or more transmitting transducers ar used.

10. A method as claimed in Claim 7, characterised in that the locally distributed ultrasonic transducers (32, 132 . . .) are used both as transmitting and receiving transducers.

11. A method as claimed in one of Claims 9 or 10, characterised in that the individual transmitting transducers or transmitting and receiving transducers (32, 132 . . .) transmit ultrasonic pulses at different times.

12. A method as claimed in one of Claims 9 or 10, characterised in that the transducers (32, 132 . . .) transmit signals coded differently to one another.

13. A method as claimed in one of Claims 1 to 12, characterised in that, in the region of the respective echo with different assignments (24) in the store (23), that assignment (24) is adaptively selected with which the maximum amplification of the echo ($\bar{1}$) occurs (Figure 2a).

14. A method as claimed in one of Claims 1 to 12, characterised in that the assignment (24) in the store (23) is determined by correlation calculation between the integrated and the instantaneous echo.

15. A method as claimed in one of Claims 13 or 14, characterised in that the assignment (24) in the store (23) is carried out in accordance with the change in the echo delay time of a detected object.

16. A method as claimed in one of Claims 13 to 15, characterised in that path parameters, such as relative speed, angle $\alpha_i$, distance from the object location . . ., from the adaptively determined assignment (24) in the store (23), are determined for the moving system comprising at least one transmitting transducer and at least one receiving transducer (32, 132, 232 . . .).

**Revendications**

1. Procédé pour évaluer des signaux d'échos (1, 2), qui apparaissent de façon répétée lors du déplacement d'un robot, notamment du bras ou de l'organe de préhension (31) d'un robot, sur la base d'impulsions d'émission émises en permanence par un transducteur ultrasonore (32), le transducteur ultrasonore étant situé sur une partie mobile du robot, notamment sur le bras ou l'organe de préhension du robot, caractérisé par le fait

que les signaux d'échos (1, 2; 1', 2'), qui apparaissent selon une séquence temporelle, d'une impulsion respective d'émission sont enregistrées selon une séquence correspondante dans une mémoire (3, 4), dans laquelle cette séquence temporelle est convertie en une séquence correspondante de positions de mémoire (3),

que des séquences successives de signaux d'échos (1, 2 et 1', 2') d'impulsions successives d'émission du transducteur ultrasonore (32) sont mémorisées selon les mêmes séquences (figures 1b et 1d) des positions de mémoire (3),

que des intégrations (23, $\bar{1}$) des signaux d'échos, mémorisés dans les différentes positions de mémoire (3), des séquences successives (1, 2; 1', 2') sont exécutées de telle sorte que le décalage local respectif, qui apparaît entre les impulsions successives d'émission, du transducteur (32) situé sur le bras ou l'organe de préhension (31) du robot, est compensé lors de l'association réciproque (24) des positions de mémoire des différentes séquences successives (figures 2a, 2b).

2. Procédé suivant la revendication 1, caractérisé par le fait que le décalage local du transducteur (32) dans la direction de déplacement (34) du bras ou de l'organe de préhension (31) du robot est compensé par cette association (24).

3. Procédé suivant la revendication 1, caractérisé par le fait que le décalage relatif (35) du transducteur (32), considéré dans un angle solide prédéterminé ($\alpha_i$) rapporté à la direction de déplacement (34) du bras ou de l'organe de préhension (31) du robot, est compensé par cette association (24).

4. Procédé selon la revendication 1, 2 ou 3, caractérisé en ce que le déplacement relatif respectif (35), considéré dans un angle solide prédéterminé ($\alpha_i$) rapporté à la direction de déplacement (34) du bras ou de l'organe de préhension (31) du robot, est compensé par cette association (24), cet angle solide ($\alpha_i$) étant dépendant de la distance instantanée entre le transducteur (32) d'un point fixe (37) d'un objet, qui est décalé par rapport à la direction de déplacement (34) du bras ou de l'organe de préhension (31) du robot.

5. Procédé suivant la revendication 3 ou 4, caractérisé par le fait qu'une telle compensation est mise en œuvre pour plusieurs angles solides respectifs prédéterminés $\alpha_i$ ($\neq 0$) différents.

6. Procédé suivant l'une des revendications 3, 4 ou 5, caractérisé par le fait qu'il est prévu une prédétermination, variant avec le déplacement du bras ou de l'organe de préhension du robot, d'au moins un angle solide $\alpha_i$.

7. Procédé suivant l'une des revendications 1 à 6, selon lequel plusieurs transducteurs (32, 132, 232 . . .) sont disposés en tant que capteurs ultrasonores à distance les uns des autres sur la partie devant être guidée du bras ou de l'organe de préhension (31) du robot, caractérisé par le fait que les séquences successives des signaux d'échos (1, 2; 1′, 2′) de chacun des transducteurs (32, 132, ...) sont traitées conformément à l'une des revendications 1 à 6, et que, pour réduire l'ambiguïté du repérage de l'emplacement, les signaux d'échos déjà intégrés des différents transducteurs (32, 132, ...) sont évalués en combinaison (figures 4, 5).

8. Procédé suivant la revendication 7, caractérisé par le fait qu'on utilise un transducteur d'émission et deux ou plusieurs transducteurs de réception (32, 132, . . .) distribués localement (figures 4, 5).

9. Procédé suivant la revendication 7, caractérisé par le fait qu'on utilise un transducteur de récepteur et deux ou plusieurs transducteurs d'émission.

10. Procédé suivant la revendication 7, caractérisé par le fait qu'on utilise les transducteurs ultrasonores (32, 132 . . .) distribués localement, aussi bien comme transducteurs d'émission que comme transducteurs de réception.

11. Procédé suivant l'une des revendications 9 ou 10, caractérisé par le fait que des impulsions ultrasonores sont émises à des instants différents à l'aide de différents transducteurs d'émission ou de réception (32, 132 . . .).

12. Procédé suivant l'une des revendications 9 ou 10, caractérisé par le fait que des signaux codés différemment les uns des autres sont émis par les transducteurs (32, 132 . . .).

13. Procédé suivant l'une des revendications 1 à 12, caractérisé par le fait que dans la zone de l'écho respectif on évalue d'une manière adaptative, au moyen de différentes associations (24) dans la mémoire (23), l'association (24) pour laquelle on obtient l'amplification maximale de l'écho ($\bar{1}$) (figure 2a).

14. Procédé suivant l'une des revendications 1 à 12, caractérisé par le fait qu'on détermine l'association (24) dans la mémoire (23) au moyen d'un calcul de corrélation entre l'écho intégré et l'écho instantané.

15. Procédé suivant l'une des revendications 13 ou 14, caractérisé par le fait que l'association (24) est exécutée dans la mémoire (23) coformément à la variation du temps de propagation de l'écho d'un objet détecté.

16. Procédé suivant l'une des revendications 13 à 15, caractérisé par le fait qu'à partir de l'association (24) déterminée de façon adaptative dans la mémoire (23), on calcule des paramètres de trajectoire, comme par exemple la vitesse relative, l'angle $\alpha_i$, la distance par rapport à la position de l'objet ..., pour le système mobile constitué par au moins un transducteur d'émission et au moins un transducteur de réception (32, 132, 232, . . .).

FIG 1a

FIG 1b

FIG 1c

FIG 1d

FIG 2a

FIG 2b

FIG 3

FIG 4

FIG 5